# EUROPÄISCHE PATENTSCHRIFT

(11) **EP 0 761 967 B1**
(45) Veröffentlichungstag und Bekanntmachung des Hinweises auf die Patenterteilung: **08.09.1999**
(21) Anmeldenummer: 96107145.3
(22) Anmeldetag: 07.05.1996
(51) Int. Cl.: F04B 53/16, F04B 1/04

(54) **Hydraulikgehäuseblock mit einer Kolbenpumpe**
Hydraulic housing block with piston pump
Bloc-carter hydraulique comprenant une pompe à piston

(30) Priorität: 16.08.1995 DE 19530012
(43) Veröffentlichungstag der Anmeldung: 12.03.1997
(73) Patentinhaber: ROBERT BOSCH GMBH, 70442 Stuttgart (DE)
(72) Erfinder: Baur, Gerd, Dipl.-Ing., 87549 Rettenberg-Freidorf (DE); Rekofsky, Andreas, 87439 Kempten (DE)

(56) Entgegenhaltungen:
- WO-A-96/28661
- DE-A- 4 306 902
- DE-A- 4 329 211
- DE-A- 4 407 978

## Beschreibung

### Stand der Technik

Die Erfindung betrifft einen Hydraulikgehäuseblock mit einer Kolbenpumpe, der beispielsweise zur Verwendung in einer Bremsanlage mit Blockierschutzeinrichtung für ein Kraftfahrzeug vorgesehen ist, mit den Merkmalen des Oberbegriffs der unabhingen Ansprüche.

Ein derartiger Hydraulikblock ist bekannt aus der DE 43 29 211 C1. In eine Aufnahmebohrung des bekannten Gehäuseblocks ist ein Zylinder einer Kolbenpumpe eingesetzt, in welchem ein Kolben verschiebbar gelagert und beispielsweise mittels eines rotierend antreibbaren Exzenters zu einer hin- und hergehenden Hubbewegung antreibbar ist. Der Zylinder ist in die Aufnahmebohrung so tief eingesteckt, daß ein Zylinderflansch an einer Ringstufe der Aufnahmebohrung anliegt. Zum Befestigen des Zylinders in der Aufnahmebohrung wird der Gehäuseblock verstemmt, also Werkstoff des Gehäuseblocks plastisch verformt, so daß er den Zylinderflansch umgreift und dadurch den Zylinder in der Aufnahmebohrung fixiert.

Durch die Druckschrift WO-A-9628661, die unter Artikel 54(3) fällt, gehört zum Stand der Technik ein Gehäuseblock mit einer Kolbenpumpe, die einen Zylinder aufweist, in welchem ein zu einer hin- und hergehenden Hubbewegung antreibbarer Kolben aufgenommen ist, wobei der Zylinder in eine Aufnahmebohrung im Gehäuseblock aufgenommen ist. Dabei weist der Zylinder ein Zylinderende und in diesem zum Auslassen von gefördertem Fluid einen von einer Querbohrung gebildeten Querkanal auf. In einem ersten Abstand von einer Stirnseite am offenen Anfang des Zylinders weist dieser eine erste nach außen überstehende Ringschulter und zwischen dieser und der Stirnseite an die Ringschulter angrenzend eine erste ringartig verlaufende Nut auf. Eine zweite nach außen überstehende Ringschulter hat einen größeren Durchmesser als die erste und befindet sich zwischen der ersten Ringschulter und dem Zylinderende, wobei eine zweite Nut der zweiten Ringschulter in Einschieberichtung des Zylinders vorgeordnet ist. Eine dritte Ringschulter am Zylinderende hat einen größten Durchmesser. In Einschubrichtung des Zylinders ist dieser dritten Ringschulter eine dritte Nut zugeordnet. Die Aufnahmebohrung des Gehäuseblocks ist derart gestuft ausgebildet, daß beim Einschieben des Zylinders in die gestufte Aufnahmebohrung alle drei Ringschultern des Zylinders gegen Schultern aus Gehäuseblockwerkstoff treffen. Durch Aufbringen einer Einpreßkraft auf das Zylinderende wird der Gehäusewerkstoff mittels der Ringschultern radial einwärts verformt, um die jeweils zugeordneten Nuten in abdichtenden Kontakt mit Gehäuseblockwerkstoff auszufüllen. In einem Bereich zwischen der zweiten Ringschulter und der dritten Nut der dritten Ringschulter kommuniziert der Querkanal mit der Aufnahmebohrung und dadurch auch mit einem von der Aufnahmebohrung ausgehenden Auslaßkanal im Gehäuseblock. Entgegen der Einbaurichtung des Zylinders wirkende Kräfte aus Druck im Zylinder und Druck auf einer Ringfläche mit im wesentlichen einer Breite aus der Differenz zwischen dem Durchmesser der dritten Nut und dem Durchmesser der zweiten Nut werden vom Gehäuseblockwerkstoff aufgefangen.

### Vorteile der Erfindung

Beim erfindungsgemäßen Gehäuseblock mit den Merkmalen des Anspruchs 1 wird der Zylinder in die Aufnahmebohrung des Gehäuseblocks eingeschoben, bis eine radial nach außen überstehende Ringschulter des Zylinders am Gehäuseblock zur Anlage kommt. Die Ringschulter befindet sich an einem auslaßseitigen Ende des Zylinders, also auf der Druckseite der Kolbenpumpe. Wenn die Ringschulter am Gehäuseblock anliegt, wird der Zylinder in den Gehäuseblock eingepreßt, wobei die Ringschulter Werkstoff des Gehäuseblocks verdrängt, d. h. plastisch verformt. Der Werkstoff fließt in radialer Richtung nach innen. Der Zylinder wird so tief eingepreßt, daß der plastisch verformte Werkstoff des Gehäuseblocks zur Anlage an einer Außenumfangsfläche des Zylinders kommt und den Zylinder gegenüber dem Gehäuseblock abdichtet sowie im Gehäuseblock fixiert. Durch die Anordnung der Ringschulter auf der Druckseite der Kolbenpumpe erspart man sich ein Hochdruckdichtelement. Der Gehäuseblock oder allgemein das Teil, dessen Werkstoff plastisch verformt wird, besteht aus einem weicheren Werkstoff als das Werkstoff verdrängende Teil. Indem gemäß Anspruch 1 die Flächen am Außenumfang des Zylinders, auf die zumindest während eines Arbeitshubs der Kolbenpumpe unter Druck stehendes Fluid eine Kraft in Einführrichtung des Zylinders bewirkt, größer ausgebildet sind, als diejenigen Flächen, auf welche unter Druck stehendes Fluid eine entgegengesetzte Kraft bewirkt, wird erreicht, daß während des Arbeitshubs der Kolbenpumpe eine resultierende Kraft auf den Zylinder wirkt, die einer durch die Kolbenbewegung verursachten und durch das dabei geförderte Fluid auf den Zylinder übertragenen Kraft entgegenwirkt. Die während des Arbeitshubs vom Kolben auf den Zylinder übertragene Kraft wird also je nach Größe der genannten Zylinderflächen teilweise, voll oder auch überkompensiert, so daß die erforderlichen Befestigungskräfte des Zylinders im Gehäuseblock klein sind.

Die Erfindung hat den Vorteil einer einfachen Befestigung und Abdichtung des Zylinders im Gehäuseblock mit einem Arbeitsgang, ohne daß zusätzliche Befestigungselemente notwendig wären und unter Einsparung einer hochdruckfesten Abdichtung. Sie hat zusätzlich den Vorteil eines weitgehenden Schutzes gegen Demontage der Kolbenpumpe, die zu einem Totalausfall einer Bremsanlage führen würde.

Die Unteransprüche betreffen vorteilhafte Weiterbildungen und Verbesserungen der im Hauptanspruch angegebenen Erfindung.

Durch umlaufende Dichtrillen gemäß dem Anspruch 3 wird die Abdichtung zwischen Zylinder und Gehäuseblock durch Erhöhung der Anzahl der Dichtstellen verbessert.

Der unabhängige Anspruch 5 betrifft das Vorsehen der Ringschulter am Gehäuseblock, so daß Werkstoff des Zylinders zu dessen Fixierung und Abdichtung im Gehäuseblock plastisch verdrängt, in diesem Fall radial nach außen verformt wird. Eine Nut, in die hinein Werkstoff des Zylinders zur Erzielung einer in beide Richtungen wirksamen formschlüssigen Verbindung plastisch verdrängbar ist, ist bei dieser Ausführungsform der Erfindung in der Aufnahmebohrung des Gehäuses vorgesehen.

### Zeichnung

Die Erfindung wird nachfolgend anhand von zwei in der Zeichnung dargestellten Ausführungsbeispielen näher erläutert. Es zeigen:
Figur 1 einen erfindungsgemäßen Gehäuseblock mit einer Kolbenpumpe im Längsschnitt und
Figur 2 eine Abwandlung des in der Figur 1 dargestellten Ausführungsbeispiels bezüglich der Anordnung eines Ventils der Kolbenpumpe.

### Beschreibung der Ausführungsbeispiele

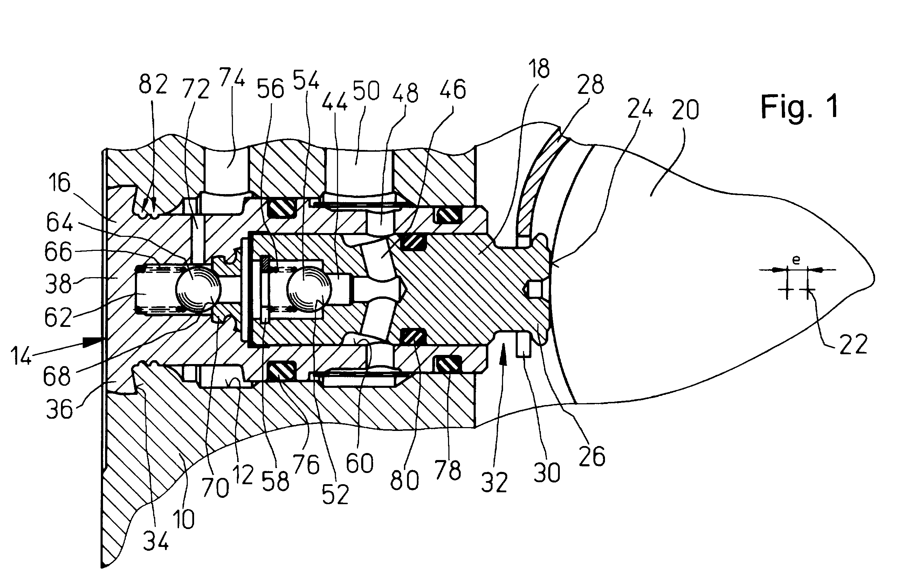

Die Figur 1 zeigt einen Schnitt eines Bereichs eines Gehäuseblocks 10, in welchem eine Kolbenpumpe untergebracht ist. Der Gehäuseblock 10 ist zur Steuerung einer Fahrzeugbremsanlage mit Blockierschutzeinrichtung, gegebenenfalls kombiniert mit einer Antriebsschlupfregelung, vorgesehen. Die Kolbenpumpe dient zur Förderung von Bremsflüssigkeit.

Der Gehäuseblock 10 weist eine Aufnahmebohrung 12 mit einer Montagemündung 14 auf, in der ein Zylinder 16 der Kolbenpumpe aufgenommen ist. Im Zylinder 16 ist ein Kolben 18 verschiebbar gelagert. Der Hubantrieb des Kolbens 18 erfolgt mittels eines Exzenters 20, der im Gehäuseblock 10 mit einer Exzentrizität e um eine Rotationsachse 22 drehbar gelagert ist und der gegen eine Stirnfläche 24 an einem Kopfende 26 des Kolbens drückt, das auf einer der Montagemündung 14 der Aufnahmebohrung 12 abgewandten Seite aus dem Zylinder 16 vorsteht. Eine Bügelfeder 28, welche mit einem geschlitzten Ende 30 in eine Nut 32 am Kopfende 26 des Kolbens 18 eingreift, hält dessen Stirnfläche 24 in Anlage an einer Umfangsfläche des Exzenters 20.

Zum Befestigen des Zylinders 16 in der Aufnahmebohrung 12 weist der Zylinder 16 eine radial nach außen überstehende Ringschulter 34 auf, die an einem Zylinderflansch 36 ausgebildet ist. Der Zylinderflansch 36 befindet sich an einem geschlossenen Zylinderende 38, welches sich in der Montagemündung 14 der Aufnahmebohrung 12 befindet.

In dem Kolben ist ein Einlaßventil integriert: Der Kolben 18 weist eine gestufte Längsbohrung 44 auf, die an seinem im Zylinder 16 befindlichen Ende mündet, die als Sackbohrung ausgebildet ist und etwa bis in die Mitte des Kolbens 18 reicht. Über Querbohrungen 46, 48 im Kolben 18 und im Zylinder 16 kommuniziert die Längsbohrung 44 mit einem Einlaßkanal 50 des Gehäuseblocks 10. An einer Ringstufe der Längsbohrung 44 ist eine konische Ventilsitzfläche 52 ausgebildet, gegen die eine Kugel 54 als Ventilschließkörper von einer Schraubendruckfeder 56 gedrückt wird. Die Schraubendruckfeder 56 stützt sich gegen einen Seegerring 58 ab, der in eine Nut in der Mündung der Längsbohrung 44 des Kolbens 18 eingesetzt ist. In Verlängerung einer Zylinderbohrung 60, in welcher der Kolben 18 verschiebbar gelagert ist, befindet sich ein als Rückschlagventil ausgebildetes Auslaßventil in einer Sackbohrung 62, welche in die Zylinderbohrung 60 mündet. Das Auslaßventil weist ebenfalls eine Kugel 64 als Ventilschließkörper auf, der von einer Schraubendruckfeder 66 gegen einen konischen Ventilsitz 68 gedrückt wird. Die Schraubendruckfeder 66 stützt sich gegen ein geschlossenes Ende der Sackbohrung 62 ab. Die Ventilsitzfläche 68 ist an einem durchbohrten Ventilsitzkörper 70 ausgebildet, welcher in eine Stufe am Übergang von der Sackbohrung 62 in die Zylinderbohrung 60 eingesetzt ist. Der Ventilsitzkörper 70 ist durch Verstemmen im Zylinder 16 befestigt. Das Verstemmen kann in an sich bekannter Weise mittels eines Stemmwerkzeugs oder auch durch Einpressen in der Weise erfolgen, wie es im Ausführungsbeispiel dargestellt ist.

In die Sackbohrung 62 mündet eine Querbohrung 72 des Zylinders 16, die mit einem Auslaßventil 74 des Gehäuseblocks 10 kommuniziert.

Zwischen Druckseite und Saugseite der Kolbenpumpe erfolgt die Abdichtung mittels eines Dichtrings 76, der in eine Zylindernut eingesetzt ist. Auf der Niederdruckseite ist ebenfalls ein Dichtring 78 in eine Zylindernut eingesetzt. Auch der Kolben 18 ist mittels eines in eine Kolbennut eingesetzten Dichtrings 80 gegenüber dem Zylinder 16 abgedichtet.

Die Ringschulter 34 steht in radialer Richtung nach außen über einen Nenndurchmesser des Zylinders 16 bzw. einer Aufnahmebohrung 12 für den Zylinder 16 im Gehäuseblock 10 über.

Der Zylinder 16 verjüngt sich an der Ringschulter 34 auf einen Durchmesser, der kleiner als der Nenndurchmesser ist. Beim Einpressen des Zylinders in den Gehäuseblock 10 wird Werkstoff des Gehäuseblocks 10 von der Ringschulter 34 des Zylinderflansches 36 unter plastischer Verformung verdrängt und fließt in radialer Richtung nach innen, so daß er auch nach Abschluß des Einpreßvorgangs dichtend am Zylinder 16 anliegt. Die durch Verformung von Werkstoff des Gehäuseblocks 10 bewirkte Verbindung zwischen Zylinder 16 und Gehäuseblock 10 ist in Einpreßrichtung des Zylinders 16 formschlüssig, in entgegengesetzter Richtung reibschlüssig.

Die Abdichtung zwischen Zylinder 16 und Gehäuseblock 10 an der Verstemmstelle, also von der Druckseite der Kolbenpumpe zur Umgebung, erfolgt auf kleinerem Durchmesser als die Abdichtung zwischen Saug- und Druckseite mittels eines Dichtrings 76. Infolgedessen wirkt eine resultierende Kraft in Einpreßrichtung auf den Zylinder 16, wenn Fluid auf der Druckseite, also im Auslaß 74, unter Druck steht. Dies ist zumindest während des Arbeitshubs eines Kolbens 18 der Kolbenpumpe der Fall, d. h. wenn der Kolben 18 vom Exzenter 20 in die Zylinderbohrung 60 hineingedrückt wird. Diese resultierende Kraft wirkt der Kraft entgegen, die der Kolben 18 während des Arbeitshubs über das zum Auslaß 74 geförderte Fluid auf den Zylinder 16 ausübt. Die erforderliche Haltekraft, um den Zylinder 16 im Gehäuseblock 10 zu fixieren, ist dadurch klein. Sie ist abhängig von der Auslegung der Kolbenpumpe, insbesondere vom Nenndurchmesser des Zylinders 16, vom Durchmesser an der Verstemmstelle und vom Kolbendurchmesser sowie von den Fluiddrücken.

Zur Verbesserung der Abdichtung an der Verstemmstelle weist der Zylinder 16 an der Verstemmstelle zwei umlaufende Dichtrillen 82 auf, in die Werkstoff des Gehäuseblocks beim Einpressen des Zylinders 16 in den Gehäuseblock 10 hinein verformt wird. Es bilden sich zwei zusätzliche Dichtstellen, die die Abdichtung verbessern.

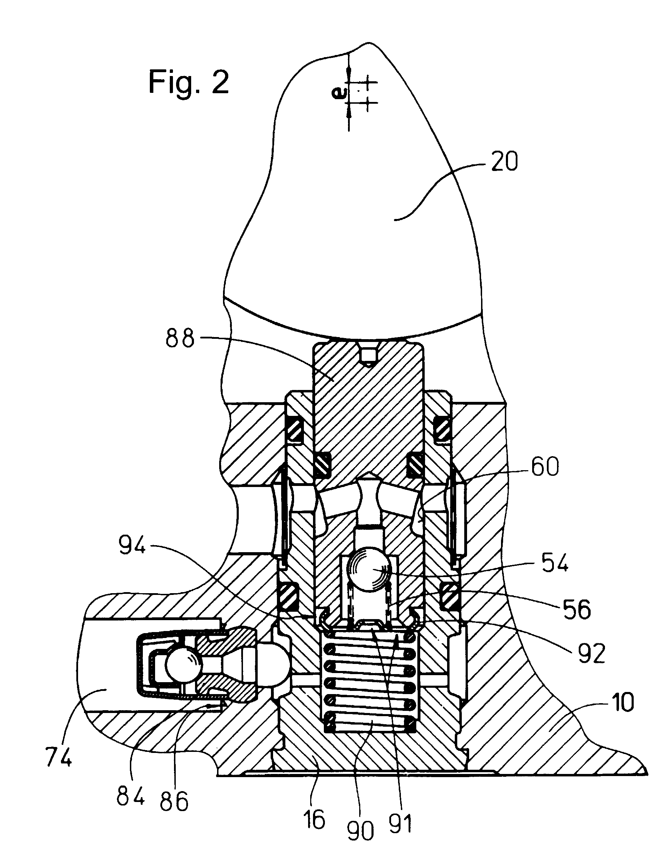

Figur 2 zeigt eine Abwandlung des ersten, in Figur 1 dargestellten Ausführungsbeispiels der Erfindung, bei dem ein Auslaßventil im Gehäuseblock 10 und nicht im Zylinder 16 untergebracht ist. Zur Vermeidung von Wiederholungen werden im folgenden nur die Änderungen gegenüber dem ersten Ausführungsbeispiel beschrieben, im übrigen wird auf die Beschreibung des ersten Ausführungsbeispiels verwiesen. Für übereinstimmende Bauteile werden gleiche Bezugszahlen verwendet.

Das Auslaßventil, ein an sich bekanntes Rückschlagventil 84, ist in einen Auslaßkanal 74 im Gehäuseblock 10 radial zum Zylinder 16 angeordnet. Es ist durch Verstemmen 86 von Werkstoff des Gehäuseblocks 10 befestigt.

Ein Kolben 88 der Kolbenpumpe wird von einer in eine Zylinderbohrung 60 eingesetzten Schraubendruckfeder 90 in Anlage am Exzenter 20 gehalten. Eine Bügelfeder 28 wie im ersten Ausführungsbeispiel entfällt also.

Anstelle eines Seegerrings zur Abstützung einer Schraubendruckfeder 56 des in den Kolben 88 integrierten Einlaßventils ist bei der in Figur 2 dargestellten Ausführungsform eine Durchbrechungen aufweisende Stützkappe 92 an einem Stirnende des Kolbens 88 angebracht, gegen die sich die Schraubendruckfeder 56 des Einlaßventilschließkörpers 54 abstützt. Die Stützkappe 92 umgreift das Stirnende des Kolbens 88 und greift in eine Nut 94 ein. Der Kolben 88 verjüngt sich an seinem Stirnende, der Außendurchmesser der Stützkappe 92 ist kleiner als der Durchmesser der Zylinderbohrung 60. Die Stützkappe 92 hat also radialen Abstand ("Luft") zur Zylinderbohrung 60.

## Patentansprüche

1. Gehäuseblock (10) mit einer Kolbenpumpe, die einen Zylinder (16) aufweist, in welchem ein zu einer hin- und hergehenden Hubbewegung antreibbarer Kolben (18) aufgenommen ist, wobei der Zylinder (16) in eine Aufnahmebohrung (12) im Gehäuseblock (10) eingesetzt ist, dadurch gekennzeichnet, daß der Zylinder (16) eine radial nach außen überstehende Ringschulter (34), an der sich der Zylinder (16) in einer Einführrichtung des Zylinders (16) in dem Gehäuseblock (10) auf einen Durchmesser der Aufnahmebohrung (12) verjüngt, aufweist, und daß Werkstoff des Gehäuseblocks (10) durch Einpressen des Zylinders (16) in die Aufnahmebohrung (12) von der Ringschulter (34) radial nach innen in dichtende Anlage an einer Umfangsfläche des Zylinders (16) plastisch verdrängt ist und daß der Montagemündung (14) zugewandte, mit zumindest zeitweise unter Druck stehendem Fluid beaufschlagte Flächen an einem Außenumfang des Zylinders (16) größer als entgegengesetzt orientierte, von unter demselben Druck stehenden Fluid beaufschlagte Flächen am Außenumfang des Zylinders (16) sind.

2. Gehäuseblock (10) nach Anspruch 1, dadurch gekennzeichnet, daß sich die Ringschulter (34) zwischen einem Pumpenauslaß (72, 74) und einem auslaßseitigen Ende des Zylinders (16) befindet.

3. Gehäuseblock (10) nach einem der vorhergehenden Ansprüche, dadurch gekennzeichnet, daß der Zylinder (16) umlaufende Dichtrillen (82) aufweist, in die hinein Werkstoff verdrängt ist.

4. Verfahren zum Befestigen und Abdichten einer Kolbenpumpe, die einen Zylinder (16), in welchem ein Kolben (18, 88) verschiebbar gelagert ist, aufweist in einer Aufnahmebohrung (12) eines Gehäuseblocks (10) nach dem Anspruch 1, dadurch gekennzeichnet, daß der Zylinder (16) in die Aufnahmebohrung (10) eingesetzt wird, bis eine radial nach außen abstehende, in Einführrichtung orientierte Ringschulter (34) des Zylinders (16) in Anlage am Gehäuseblock (10) gelangt, und daß der Zylinder (16) anschließend tiefer in die Aufnahmebohrung (12) eingepreßt wird, so daß die Ringschulter (34) Werkstoff des Gehäuseblocks (10) plastisch radial nach innen verdrängt, bis der verdrängte Werkstoff dichtend am Zylinder (16) anliegt und den Zylinder (16) in der Aufnahmebohrung (12) fixiert.

5. Gehäuseblock (10) mit einer Kolbenpumpe, die einen Zylinder (16) aufweist, in welchem ein zu einer hin- und hergehenden Hubbewegung andrehbarer Kolben (18) aufgenommen ist, wobei der Zylinder (16) in eine Aufnahmebohrung (12) im Gehäuseblock (10) eingesetzt ist, dadurch gekennzeichnet, daß der Gehäuseblock (10) eine radial nach innen in seine Aufnahmebohrung (12) ragende Ringschulter, die einer Montagemündung (14) der Aufnahmebohrung (12) zugewandt ist, aufweist, und daß Werkstoff des Zylinders (16) durch Einpressen in die Aufnahmebohrung (12) von der Ringschulter radial nach außen in dichtende Anlage an eine Wandfläche der Aufnahmebohrung (12) des Gehäuseblocks (10) plastisch verdrängt ist.

6. Gehäuseblock (10) nach Anspruch 5, dadurch gekennzeichnet, daß der Gehäuseblock (10) eine Nut in seiner Aufnahmebohrung (12) auf einer der Montagemündung (14) zugewandten Seite der Ringschulter aufweist, in die der Werkstoff des Zylinders (16) hineinverdrängt ist.

7. Verfahren zum Befestigen und Abdichten einer Kolbenpumpe, die einen Zylinder (16), in welchem ein Kolben (18, 88) verschiebbar ist, aufweist, in einer Aufnahmebohrung (12) eines Gehäuseblocks (10) nach Anspruch 5, dadurch gekennzeichnet, daß der Zylinder (16) in die Aufnahmebohrung (12) eingesetzt wird, bis eine radial nach innen stehende, der Einführrichtung des Zylinders (16) entgegengesetzt orientierte Ringschulter in der Aufnahmebohrung (12) des Gehäuseblocks (10) in Anlage am Zylinder (16) gelangt, und daß der Zylinder (16) anschließend tiefer in die Aufnahmebohrung (12) eingepreßt wird, so daß die Ringschulter Werkstoff des Zylinders (16) plastisch radial nach außen verdrängt, bis der verdrängte Werkstoff dichtend an einer Wandung der Aufnahmebohrung (12) anliegt und den Zylinder (16) in der Aufnahmebohrung (12) fixiert.

8. Verfahren nach Anspruch 7, dadurch gekennzeichnet, daß der Gehäuseblock (10) eine Nut in seiner Aufnahmebohrung (12) aufweist, in die der Werkstoff des Zylinders (16) beim Einpressen plastisch hineinverdrängt wird.

## Claims

1. Housing block (10) with a piston pump which has a cylinder (16) in which a piston (18) is accommodated which can be driven to execute a reciprocating stroke movement, the cylinder (16) being inserted into a holding bore (12) in the housing block (10), characterized in that the cylinder (16) has an annular shoulder (34) which projects radially outwards and at which the cylinder (16) tapers in an insertion direction of the cylinder (16) in the housing block (10) to a diameter of the holding bore (12), in that, by pressing the cylinder (16) into the holding bore (12), material of the housing block (10) is displaced in a plastic fashion radially inwards by the annular shoulder (34) to bear sealingly against a circumferential surface of the cylinder (16), and in that surfaces which face the mounting orifice (14) and to which fluid pressurized at least temporarily is applied are larger on one outer circumference of the cylinder (16) than surfaces on the outer circumference of the cylinder (16) which are orientated in an opposite fashion and to which fluid at the same pressure is applied.

2. Housing block (10) according to Claim 1, characterized in that the annular shoulder (34) is located between a pump outlet (72, 74) and an outlet-side end of the cylinder (16).

3. Housing block (10) according to one of the preceding claims, characterized in that the cylinder (16) has circumferential sealing grooves (82) into which material is displaced.

4. Method for fastening and sealing a piston pump which has a cylinder (16) in which a piston (18, 88) can be displaced, in a holding bore (12) of a housing block (10) according to Claim 1, characterized in that the cylinder (16) is inserted into the holding bore (10) until a radially outwardly projecting annular shoulder (34), arranged in the insertion direction, of the cylinder (16) comes to bear against the housing block (10), and in that the cylinder (16) is subsequently pressed deeper into the holding bore (12) with the result that the annular shoulder (34) displaces material of the housing block (10) radially inwards in a plastic fashion until the displaced material bears sealingly against the cylinder (16) and fixes the cylinder (16) in the holding bore (12).

5. Housing block (10) with a piston pump which has a cylinder (16) in which a piston (18) is accommodated which can be driven to execute a reciprocating stroke movement, the cylinder (16) being inserted into a holding bore (12) in the housing block (10), characterized in that the housing block (10) has an annular shoulder which projects radially inwards into the holding bore (12) of said housing block and faces a mounting orifice (14) of the holding bore (12), and in that, by being pressed into the holding bore (12), material of the cylinder (16) is displaced radially outwards by the annular shoulder to bear sealingly against a wall surface of the holding bore (12) of the housing block (10).

6. Housing block (10) according to Claim 5, characterized in that the housing block (10) has a groove in its holding bore (12) on a side of the annular shoulder facing the mounting orifice (14), into which groove the material of the cylinder (16) is displaced.

7. Method for fastening and sealing a piston pump which has a cylinder (16) in which a piston (18, 88) can be displaced, in a holding bore (12) of a housing block (10) according to Claim 5, characterized in that the cylinder (16) is inserted into the holding bore (12) until a radially inwardly projecting annular shoulder in the holding bore (12) of the housing block (10), which annular shoulder is arranged in a fashion opposite to the insertion direction of the cylinder (16), comes to bear against the cylinder (16), and in that the cylinder (16) is subsequently pressed deeper into the holding bore (12), with the result that the annular shoulder displaces material of the cylinder (16) radially outwards in a plastic fashion until the displaced material bears sealingly against a wall of the holding bore (12) and fixes the cylinder (16) in the holding bore (12).

8. Method according to Claim 7, characterized in that the housing block (10) has a groove in its holding bore (12) into which the material of the cylinder (16) is displaced in a plastic fashion when being pressed in.

## Revendications

1. Bloc de carter (10) avec une pompe à piston qui présente un cylindre (16), dans lequel est logé un piston (18) qui peut être entraîné dans un mouvement alternatif de va et vient, le cylindre (16) étant inséré dans un alésage de réception (12) dans le bloc de carter (10),
caractérisé en ce que
- le cylindre (16) présente un épaulement annulaire (34) débordant radialement vers l'extérieur, sur lequel le cylindre (16) se rétrécit dans un sens d'introduction du cylindre (16) dans le bloc de carter (10) à un diamètre de l'alésage de réception (12), et
- la matière du bloc de carter (10) est refoulée de façon plastique par enfoncement à la presse du cylindre (16) dans l'alésage de réception (12) par l'épaulement annulaire (34) radialement vers l'intérieur en appui assurant l'étanchéité sur une surface périphérique du cylindre (16) et
- des surfaces orientées vers l'embouchure de montage (14),sollicitées par un fluide se trouvant sous pression au moins temporairement sur un pourtour extérieur du cylindre (16) sont plus grandes que les surfaces orientées en sens opposé, sollicitées par un fluide se trouvant sous la même pression sur le pourtour extérieur du cylindre (16).

2. Bloc de carter (10) selon la revendication 1,
caractérisé en ce que
l'épaulement annulaire (34) se trouve entre une sortie de la pompe (72, 74) et une extrémité située du côté de la sortie du cylindre (16).

3. Bloc de carter (10) selon l'une des revendications précédentes,
caractérisé en ce que
le cylindre (16) présente des rainures d'étanchéité (82) qui font tout le tour, dans lesquelles de la matière est refoulée.

4. Procédé de fixation et d'étanchéité d'une pompe à piston qui présente un cylindre (16), dans lequel un piston (18, 88) est monté de façon à pouvoir coulisser, dans un alésage de réception (12) d'un bloc de carter (10) selon la revendication 1,
caractérisé en ce que
- le cylindre (16) est inséré dans l'alésage de réception (10) jusqu'à ce qu'un épaulement annulaire (34) du cylindre (16) se dressant radialement vers l'extérieur, orienté dans le sens de l'introduction, vienne en appui sur le bloc de carter (10), et
- le cylindre (16) est ensuite enfoncé à la presse plus profondément dans l'alésage de réception (12), de telle sorte que l'épaulement annulaire (34) refoule de façon plastique de la matière du bloc de carter (10) radialement vers l'intérieur, jusqu'à ce que la matière refoulée repose de façon étanche sur le cylindre (16) et fixe le cylindre (16) dans l'alésage de réception (12).

5. Bloc de carter (10) avec une pompe à piston qui présente un cylindre (16), dans lequel est logé un piston (18) qui peut être entraîné dans un mouvement alternatif de va et vient, le cylindre (16) étant inséré dans un alésage de réception (12) dans le bloc de carter (10),
caractérisé en ce que
- le bloc de carter (10) présente un épaulement annulaire saillant radialement vers l'intérieur dans son alésage de réception (12) qui est tourné vers une embouchure de montage (14) de l'alésage de réception (12), et
- la matière du cylindre (16) est refoulée de façon plastique par enfoncement à la presse dans l'alésage de réception (12) de l'épaulement annulaire radialement vers l'extérieur pour venir en appui en assurant l'étanchéité sur la surface d'une paroi de l'alésage de réception (12) du bloc de carter (10).

6. Bloc de carter (10) selon la revendication 5,
caractérisé en ce que
le bloc de carter (10) présente une rainure dans son alésage de réception (12) sur un côté de l'épaulement annulaire tourné vers l'embouchure de montage (14), épaulement annulaire dans lequel la matière du cylindre (16) est refoulée.

7. Procédé pour fixer et pour rendre étanche une pompe à piston qui présente un cylindre (16), dans lequel peut coulisser un piston (18, 88), dans un alésage de réception (12)d'un bloc de carter (10) selon la revendication 5,
caractérisé en ce que
- le cylindre (16) est inséré dans l'alésage de réception (12), jusqu'à ce qu'un épaulement annulaire, se dressant radialement vers l'intérieur, orienté en sens opposé au sens d'introduction du cylindre (16), arrive dans l'alésage de réception (12) du bloc de carter (10) en appui sur le cylindre (16), et
- le cylindre (16) est enfoncé à la presse plus profondément dans l'alésage de réception de telle sorte que l'épaulement annulaire refoule de façon plastique de la matière du cylindre (16) vers l'extérieur, jusqu'à ce que la matière refoulée s'applique de façon étanche sur une paroi de l'alésage de réception (12) et fixe le cylindre (16) dans l'alésage de réception (12).

8. Procédé selon la revendication 7,
caractérisé en ce que
le bloc de carter (10) présente une rainure dans son alésage de réception (12), dans laquelle la matière du cylindre (16) est refoulée de façon plastique lors de l'enfoncement à la presse.
